# EUROPÄISCHE PATENTSCHRIFT

(11) **EP 2 941 616 B1**
(45) Veröffentlichungstag und Bekanntmachung des Hinweises auf die Patenterteilung: **04.01.2017**
(21) Anmeldenummer: 14727394.0
(22) Anmeldetag: 07.05.2014
(51) Int. Cl.: F41H 7/04

(54) **AMPHIBIENFAHRZEUG UND VERFAHREN ZUM BETRIEB EINES AMPHIBIENFAHRZEUGS**
AMPHIBIOUS VEHICLE AND METHOD FOR OPERATING AN AMPHIBIOUS VEHICLE
VÉHICULE AMPHIBIE ET PROCÉDÉ POUR FAIRE FONCTIONNER UN VÉHICULE AMPHIBIE

(30) Priorität: 10.05.2013 DE 102013104833
(43) Veröffentlichungstag der Anmeldung: 11.11.2015
(73) Patentinhaber: Krauss-Maffei Wegmann GmbH & Co. KG, 80997 München (DE)
(72) Erfinder: BACHMANN, Harald, 81475 München (DE); FALKE, Thomas, 80997 München (DE); STEGER, Gernot, 80997 München (DE)
(74) Vertreter: Feder Walter Ebert
(86) Internationale Anmeldenummer: PCT/DE2014/100160
(87) Internationale Veröffentlichungsnummer: WO 2014/180470

(56) Entgegenhaltungen:
- US-A- 2 406 290
- US-A- 2 758 561
- US-A- 3 420 204

## Beschreibung

Die Erfindung betrifft ein Amphibienfahrzeug, insbesondere ein militärisches Amphibienfahrzeug, mit einer die Fahrzeugbesatzung aufnehmenden Wanne und einem durch die Wanne geführten Strömungskanal mit einem darin angeordneten Wasserstrahlantrieb zum Antrieb des Amphibienfahrzeugs bei Wasserfahrt. Einen weiteren Gegenstand der Erfindung bildet ein Verfahren zum Betrieb eines Amphibienfahrzeugs, insbesondere eines militärischen Amphibienfahrzeugs, mit einer die Fahrzeugbesatzung aufnehmenden Wanne und einem durch die Wanne geführten Strömungskanal mit einem darin angeordneten Wasserstrahlantrieb zum Antrieb des Amphibienfahrzeugs bei Wasserfahrt.

Sowohl im zivilen wie auch im militärischen Bereich werden seit langer Zeit Amphibienfahrzeuge unterschiedlicher Bauart eingesetzt, die sich vor allem durch deren Antriebe unterscheiden. Denn aufgrund der bei Land- und Wasserfahrt stark unterschiedlichen Betriebsbedingungen, ist es erforderlich, separate Antriebe für einerseits die Land- und andererseits die Wasserfahrt vorzusehen, wozu sich in der Vergangenheit verschiedene Antriebskonzepte entwickelt haben.

Als Landfahrantrieb werden bei Amphibienfahrzeugen die aus dem Landfahrzeugbereich bekannten Rad- oder Kettenantriebe verwendet, wobei insbesondere im militärischen Bereich häufig kettengetriebene Amphibienfahrzeuge anzutreffen sind. Diese kettengetriebenen Amphibienfahrzeuge weisen üblicherweise ein Kettelaufwerk und eine geschlossene Wanne aus Panzerstahl auf, in welcher die Fahrzeugbesatzung vor militärischen Bedrohungen geschützt untergebracht ist.

Für die Wasserfahrt werden Amphibienfahrzeuge mit einem separaten Antrieb ausgestattet, der im Schwimmbetrieb für den notwendigen Vortrieb sorgt. Als Wasserfahrantrieb können verschiedene aus dem Bereich der Wasserfahrzeuge bekannte Antriebe verwendet werden. So können etwa außen am Fahrzeug angeordnete Antriebe verwendet werden, die nach Art eines Außenborders mit einem frei liegenden Propeller in dessen Heckbereich angeordnet und aus dem Inneren des Amphibienfahrzeugs mit Energie versorgt werden. Ebenso haben sich so genannte Wasserstrahlantriebe bzw. Jetantriebe als Wasserfahrantriebe bewährt. Bei diesen wird der Propeller innerhalb eines Strömungskanals angeordnet und zur Beschleunigung eines Wasserstrahls verwendet, über dessen Rückstoßkraft der erforderliche Vortrieb erzeugt wird. Im Gegensatz zu den außenliegend angeordneten Antrieben werden diese Antriebe zumeist innenliegend angeordnet, wodurch diese vor mechanischen Beschädigungen insbesondere auch während der Landfahrt besser geschützt sind. Auch gestaltet sich die Energieversorgung bei diesen Antrieben aufgrund der innenliegenden Anordnung des Propellers als weniger aufwändig, da sich hierdurch ein kürzerer und damit auch leichterer Antriebsstrang realisieren lässt.

Aus der US 3 420 204 A ist ein Amphibienfahrzeug mit Wasserstrahlantrieb bekannt, bei dem eine Ausströmöffnung des Strömungskanals über ein Schmetterlingsventil verschließbar ist.

Bei militärischen Amphibienfahrzeugen, die eine geschützte Wanne zur Aufnahme der Fahrzeugbesatzung aufweisen, hat sich die Anordnung solcher Wasserstrahlantriebe im Inneren des Fahrzeugs aufgrund des durch die Wanne hindurch geführten Strömungskanals jedoch als problematisch erwiesen. Denn die am Ende des Strömungskanals vorgesehenen Ein- bzw. Ausströmöffnungen durchsetzen die gegen militärische Bedrohungen geschützt ausgeführte Wanne, wodurch diese geschwächt wird und sich ein erhöhtes Verletzungsrisiko für die innerhalb der Wanne angeordneten Personen ergibt. Beispielsweise können die bei einer Minenexplosion ausgelösten, oftmals auch als Blast bezeichneten Gasschwaden mit sehr großer Energie in das Innere des Strömungskanals eindringen und dort zu erheblichen Beschädigungen bis hin zu einem vollständigen Abriss des Strömungskanals führen. Im schlimmsten Fall können die Gasschwaden auch in den geschützten Innenraum des Fahrzeugs eindringen, was ein erhebliches Gefährdungspotential für die Besatzung bedeutet.

Vor diesem Hintergrund stellt sich die Erfindung die Aufgabe, ein Amphibienfahrzeug wie auch ein Verfahren zum Betrieb eines Amphibienfahrzeugs anzugeben, die sich durch einen einfachen Aufbau des Wasserantriebs bei gleichzeitig gutem Schutz der Fahrzeugbesatzung vor militärischen Bedrohungen auszeichnen.

Bei einem Amphibienfahrzeug der eingangs genannten Art wird die Aufgabe dadurch gelöst, dass beide Enden des Strömungskanals bei Landfahrt über Minenschutzelemente verschließbar ausgebildet sind.

Durch das Verschließen des einen Endes des Strömungskanals über ein Minenschutzelement kann die Sicherheit der Besatzung bei Verwendung eines innenliegenden Wasserstrahlantriebs deutlich erhöht werden. Denn durch das Verschließen des Endes des Strömungskanals über das Minenschutzelement wird dieser von etwaigen militärischen Bedrohungen abgeschirmt und insbesondere ein Eindringen von Kampfstoffen, Splittern, Druckwelle, Minenblast und ähnlichem verhindert. Bei Wasserfahrt kann der Strömungskanal geöffnet werden, so dass sich ein Amphibienfahrzeug ergibt, welches sich gleichermaßen durch einen innenliegenden Wasserantrieb mit einfachem Antriebsstrang wie auch ein hohes Maß an Sicherheit für die Fahrzeugbesatzung auszeichnet.

Erfindungsgemäß sind beide Enden des Strömungskanals bei Landfahrt über Minenschutzelemente verschließbar ausgebildet, so dass beide Enden des Strömungskanals gegenüber militärischen Bedrohungen abgeschirmt werden. Hierdurch kann der Schutz des Amphibienfahrzeugs bei der Landfahrt entscheidend verbessert werden.

Die Wanne des Amphibienfahrzeugs kann aus Panzerstahl ausgebildet sein, um die Fahrzeugbesatzung insbesondere vor ballistischen Bedrohungen zu schützen. Bevorzugt ist auch das Minenschutzelement aus Panzerstahl ausgebildet, wodurch sich auch insoweit ein guter Schutz gegen ballistische Bedrohungen im Bereich des Endes des Strömungskanals ergibt.

Gemäß einer konstruktiven Ausgestaltung ist das Minenschutzelement plattenförmig ausgebildet, wodurch sich eine kompakt bauende Verschlussmöglichkeit für das Ende des Strömungskanals ergibt.

Als vorteilhaft hat es sich erwiesen, wenn das Minenschutzelement zwischen einer Minenschutzstellung und einer Durchflussstellung hin- und her bewegbar ist. In der Minenschutzstellung kann das Minenschutzelement das Ende des Strömungskanals bei der Landfahrt verschließen. In der Durchflussstellung kann das Ende des Strömungskanals zum Durchfluss von Wasser freigegeben sein. Durch Bewegung des Minenschutzelements kann wahlweise zwischen der Minenschutzstellung und der Durchflussstellung hin- und her gewechselt werden, je nachdem, ob sich das Amphibienfahrzeug an Land oder im Wasser bewegt.

Bevorzugt ist ein Rahmen zur Abstützung des Minenschutzelements bei Mineneinwirkung vorgesehen. Der Rahmen bildet eine sichere Abstützung des Minenschutzelements, so dass dieses sich selbst unter dem Einfluss einer Minendetonation nicht nach innen in das Fahrzeuginnere hineindrücken und dort zu Verletzungen der Fahrzeuginsassen führen kann.

Besonders bevorzugt ist das Ende des Strömungskanals von dem Rahmen umschlossen, so dass der Rahmen das Ende des Strömungskanals vollständig umschließt. Auch der Strömungskanal wird damit über das sich an dem Rahmen abstützende Minenschutzelement beispielsweise von Minendetonationen abgeschirmt.

Eine bevorzugte Ausgestaltung sieht vor, dass der Rahmen eine Flanschfläche zur Verbindung mit dem Strömungskanal aufweist. Über die Flanschfläche kann der Strömungskanal direkt mit dem Rahmen verbunden werden.

Als vorteilhaft hat es sich erwiesen, wenn eine Dichtung zur Abdichtung des Rahmens gegenüber dem Minenschutzelement vorgesehen ist. Über die Dichtung kann der Strömungskanal bei der Landfahrt vor Staub und ähnlichen Partikeln abgeschirmt werden. Aber nicht nur in der Minenschutzstellung kann über die Dichtung eine Dichtwirkung erzeugt werden. Auch bei der Wasserfahrt kann die Dichtung eine Dichtwirkung zwischen dem Minenschutzelement und einer Tasche des Amphibienfahrzeugs, in welche das Minenschutzelement bei Wasserfahrt eintaucht, erzeugen, so dass kein Wasser eindringen kann.

Gemäß einer weiteren Ausgestaltung ist eine Antriebsvorrichtung zur Bewegung des Minenschutzelements vorgesehen. Über die Antriebsvorrichtung kann das Minenschutzelement zwischen der Minenschutzstellung und der Durchflussstellung hin- und her bewegt werden. Es ist daher nicht erforderlich, das Minenschutzelement manuell zu bewegen. Die Antriebsvorrichtung kann beispielsweise als Spindelantrieb ausgebildet sein.

In diesem Zusammenhang hart sich eine Ausgestaltung bewährt, bei welcher zusätzlich zu der Antriebsvorrichtung eine Steuerelektronik zur Steuerung der Bewegungen des Minenschutzelements vorgesehen ist. Die Steuerelektronik kann die Bewegung des Minenschutzelements anhand von über Bedienelemente erfolgter Eingaben der Fahrzeugbesatzung steuern. Alternativ oder zusätzlich kann die Bewegung über Sensoren, die den Übergang von Land- zu Wasserfahrt erkennen, gesteuert werden.

Bevorzugt ist in dem Amphibienfahrzeug eine Überwachungseinrichtung zur Erkennung der Stellung des Minenschutzelements und Erzeugung eines Warnsignals bei Fehlstellung des Minenschutzelements vorgesehen. Die Überwachungseinrichtung kann die Stellung des Minenschutzelements ermitteln. Die ermittelte Stellung kann mit einer vorgegebenen Sollstellung verglichen werden und ein Warnsignal erzeugt werden, falls die ermittelte Stellung von der Sollstellung abweicht. Auf diese Weise kann verhindert werden, dass ein versehentliches Offenbleiben des Endes des Strömungskanals bei Landfahrt unentdeckt bleibt. Das Minenschutzelement kann in einem solchen Fall ggf. per Hand vor das Ende des Strömungskanals bewegt werden, um das Schutzniveau im Bereich des Endes des Strömungskanals zu erhöhen. In gleicher Weise kann erkannt werden, wenn das Minenschutzelement bei Wasserfahrt ungewollt den Strömungskanal verschließt. Im Fall einer solchen Fehlstellung kann das Minenschutzelement ggf. per Hand aus dem Bereich des Endes des Strömungskanals weg bewegt werden.

Für den Antrieb bei Wasserfahrt ist es vorteilhaft, wenn der Strömungskanal von der Unterseite der Wanne zu dem Heck der Wanne verläuft. Das Wasser kann von der Unterseite der Wanne angesaugt werden und in dem bei Wasserfahrt nach hinten weisenden Heckbereich des Amphibienfahrzeugs ausgestoßen werden. Da die Gefahr einer Minenansprengung bei Fahrzeugen allgemein im Boden- bzw. Rumpfbereich am höchsten ist, wird das Minenschutzelement bevorzugt an der Unterseite der Wanne bzw. im Rumpfbereich der Wanne angeordnet.

Bei einem Verfahren der eingangs genannten Art wird die Aufgabe dadurch gelöst, dass beide Enden des Strömungskanals bei Landfahrt über Minenschutzelemente verschlossen werden.

Es ergebend sich dieselben Vorteile wie sie bereits im Zusammenhang mit dem erfindungsgemäßen Amphibienfahrzeug beschrieben worden sind.

Gemäß einer vorteilhaften Ausgestaltung des Verfahrens erfolgt das Verschließen des Endes des Strömungskanals über das Minenschutzelement automatisch. Dies bringt den Vorteil mit sich, dass das Ende des Strömungskanals nicht manuell geschlossen werden muss.

Vorteilhaft ist es, wenn ein Sensor ein Signal zum Verschließen erzeugt, sobald detektiert wird, dass sich das Amphibienfahrzeug an Land befindet. Über den Sensor kann entweder das automatische Verschließen des Strömungskanals eingeleitet werden oder es kann der Fahrzeugbesatzung ein Warnhinweis gegeben werden, dass das Verschließen des Strömungskanals ggf. manuell eingeleitet werden muss. Der Sensor kann als Wassersensor, insbesondere als optoelektronischer, elektrischer oder mechanischer Wassersensor ausgebildet sein oder die Schaltzustände des Getriebes abfragen.

Die im Hinblick auf das erfindungsgemäße Amphibienfahrzeug beschriebenen vorteilhaften Merkmale können allein oder in Kombination auch bei dem erfindungsgemäßen Verfahren Anwendung finden.

Weitere Vorteile und Einzelheiten des Amphibienfahrzeugs und des Verfahrens zum Betrieb eines Amphibienfahrzeugs sollen nachfolgend anhand eines in den Zeichnungen dargestellten Ausführungsbeispiels erläutert werden. Darin zeigen:
- Fig. 1: in perspektivischer Ansicht ein militärisches Amphibienfahrzeug,
- Fig. 2: in perspektivischer Ansicht einen vergrößerten Ausschnitt aus der Wanne des Amphibienfahrzeugs gemäß der Darstellung in Fig. 1,
- Fig. 3: in perspektivischer Ansicht ein Ende des Strömungskanals mit einem Minenschutzelement in der Minenschutzstellung,
- Fig. 4: in perspektivischer Ansicht ein Ende des Strömungskanals mit einem Minenschutzelement in der Durchflussstellung,
- Fig. 5: in perspektivischer Schnittdarstellung das Ende des Strömungskanals, in welcher sich das Minenschutzelement in einer Zwischenstellung befindet,
- Fig. 6: in perspektivischer Schnittdarstellung das Ende des Strömungskanals, in welcher sich das Minenschutzelement in der Durchflussstellung befindet und
- Fig. 7: in perspektivischer Darstellung das Ende des Strömungskanals, in welcher sich das Minenschutzelement in der Minenschutzstellung befindet.

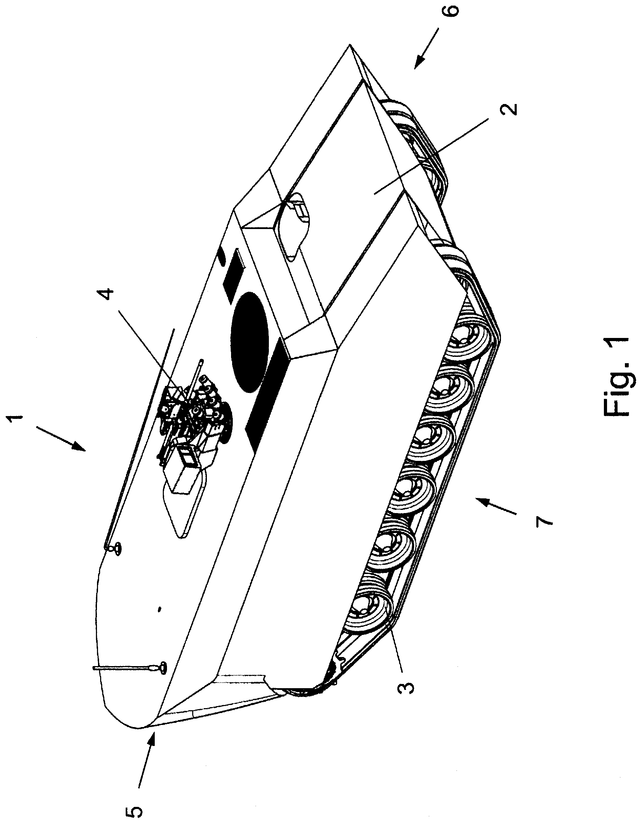

Fig. 1 zeigt ein militärisches Amphibienfahrzeug 1, welches gleichermaßen sowohl für Fahrten an Land wie auch zu Wasser eingesetzt wird.

Das Amphibienfahrzeug 1 ist nach Art eines schwimmfähigen Panzers ausgebildet und weist eine gepanzerte Wanne 2 zur Aufnahme der Fahrzeugbesatzung und ein Kettenlaufwerk 3 auf, über welches das Amphibienfahrzeug 1 an Land angetrieben wird. Das Kettenlaufwerk 3 bildet den Landfahrantrieb des Amphibienfahrzeugs 1, wobei die vorliegende Erfindung nicht auf kettengetriebene Amphibienfahrzeuge 1 beschränkt ist, sondern gleichermaßen auch bei radgetriebenen Amphibienfahrzeugen 1 eingesetzt werden kann.

Das Amphibienfahrzeug 1 weist eine Besonderheit auf, die daraus resultiert, dass die Hauptfahrtrichtungen des Amphibienfahrzeugs 1 bei Land- und Wasserfahrt entgegengesetzt sind. Beim Übergang zwischen Land- und Wasserfahrt wird die Hauptfahrtrichtung des Amphibienfahrzeugs 1 gedreht. Hierdurch bildet beispielsweise das bei der Landfahrt nach hinten weisende Fahrzeugheck bei Wasserfahrt den Bug 5 des Amphibienfahrzeugs. Im Folgenden werden daher Begriffe wie "Bug", "Heck", "vorne", "hinten" usw. jeweils im Sinne der Wasserfahrt verwendet.

Die Wanne 2 besteht aus Panzerstahl und weist zur Verbesserung der Schwimmeigenschaften im vorderen Bereich einen schiffsbugförmigen Bug 5 auf. Das im hinteren Bereich der Wanne 2 angeordnete Heck 6 hat eine stufenartige Form. Da das Heck 6 bei der Landfahrt den Bug des Fahrzeugs 1 bildet, ergibt sich aus dieser Stufenform eine bessere Bodensicht. Oberhalb der Wanne 2 ist eine in Azimut und Elevation richtbare Waffe 4 angeordnet, welche aus dem Inneren der Wanne 2 heraus ferngesteuert bedient werden kann.

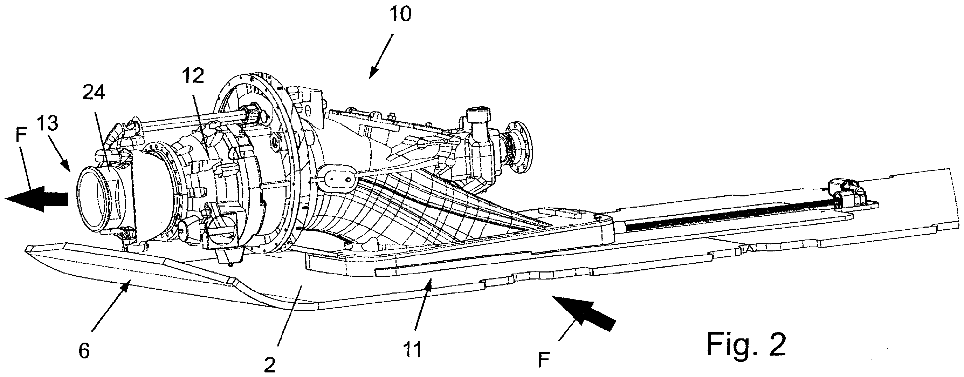

Neben dem als Landfahrantrieb dienenden Kettenlaufwerk 3 weist das Amphibienfahrzeug 1 einen Wasserstrahlantrieb 12 für die Wasserfahrt auf, der innerhalb der geschützten Wanne 2 angeordnet ist. Wie der Darstellung in Fig. 2 zu entnehmen ist, ist der Wasserstrahlantrieb 12 innerhalb eines Strömungskanals 10 angeordnet, welcher von der Unterseite 7 der Wanne 2 zu dem Heck 6 der Wanne 2 verläuft. An der Unterseite 7 befindet sich ein erstes Ende 11 des Strömungskanals 10. Durch den Wasserstrahlantrieb 12 wird über das erste Ende 11 Wasser von unterhalb des Amphibienfahrzeugs 1 angesaugt und durch den Strömungskanal 10 in Richtung des Wasserstrahlantriebs 12 geleitet.

Der Wasserstrahlantrieb 12 weist einen Impeller, also einen in dem Strömungskanal 10 angeordneten Propeller auf, und arbeitet nach Art einer Pumpe. Durch den Wasserstrahlantrieb 11 wird über das erste Ende 11 Wasser angesaugt, in Richtung des zweiten Endes 12 gefördert und dort als Antriebsstrahl aus dem Strömungskanals 10 ausgestoßen. Das zweite Ende 12 ist am Heck 6 der Wanne 2 angeordnet. In der Fig. 2 ist die Durchflussrichtung F des Strömungskanals 10 durch zwei Pfeile angedeutet.

Aufgrund der Anordnung des Strömungskanals 10 innerhalb der Wanne 2 ergibt sich ein einfacher Aufbau des Antriebsstrangs, der Wasserstrahlantrieb 12 kann auf einfache Weise mit Energie versorgt werden und ist gut gegen mechanische Beschädigungen gescützt. Im Hinblick auf das Schutzniveau der Wanne 2 gegen Bedrohungen durch Geschosse und Minen hat sich die innenliegende Anordnung des Strömungskanals 10 jedoch als nachteilig herausgestellt, da die Enden 11, 13 des Strömungskanals 10 von außen zugängliche Öffnungen der an sich geschützt ausgebildeten Wanne 2 bilden. Um die in der Wanne 2 befindliche Fahrzeugbesatzung daher besser zu schützen, ist das erste Ende 11 des Strömungskanals 10 über ein Minenschutzelement 14 verschließbar ausgebildet, worauf nachfolgend im Einzelnen eingegangen werden wird.

Das Minenschutzelement 14 dient dazu, den Strömungskanal 10 bei der Landfahrt endseitig zu verschießen und damit zu verhindern, dass bei Auslösung einer Mine entstehende Druckwellen in den Strömungskanal 10 eindringen können. Auf diese Weise können durch Mineneinwirkung hervorgerufene Beschädigungen der Wanne 2 verringert und eine Gefährdung der Besatzung ausgeschlossen werden.

Auch kann das zweite Ende 13 des Strömungskanals 10 über ein entsprechendes Minenschutzelement 14 verschließbar ausgebildet sein, wodurch sich der Schutz des Amphibienfahrzeugs 1 nochmals erhöhen lässt. Beispielsweise kann durch Schließen des zweiten Minenschutzelements 14 verhindert werden, dass etwaige Angreifer Handgranaten o.ä. in dem Strömungskanal zur Detonation bringen. Zudem wird über das Schutzelement auch ein Schutz vor Beschuss erreicht.

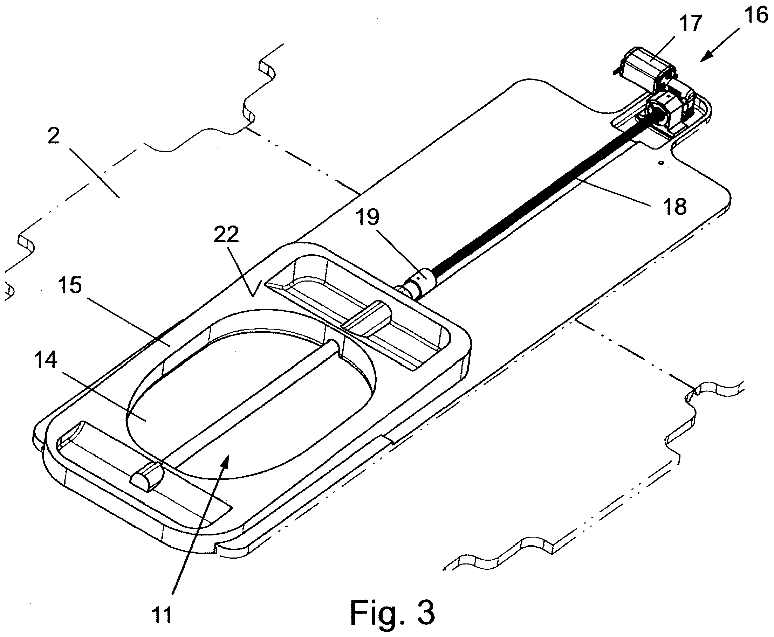

Weitere Einzelheiten des Minenschutzelements 14 sollen nachfolgend anhand der Fign. 3 bis 7 erläutert werden.

In den Fign. 3 bis 7 ist das erste Ende 11 des Strömungskanals 10, über welches das Wasser von unterhalb des Fahrzeugs angesaugt wird, über das Minenschutzelement 14 verschließbar ausgebildet. In ähnlicher Weise könnte ein entsprechendes Minenschutzelement 14 auch an dem zweiten Ende 13 des Strömungskanals 10 angeordnet werden.

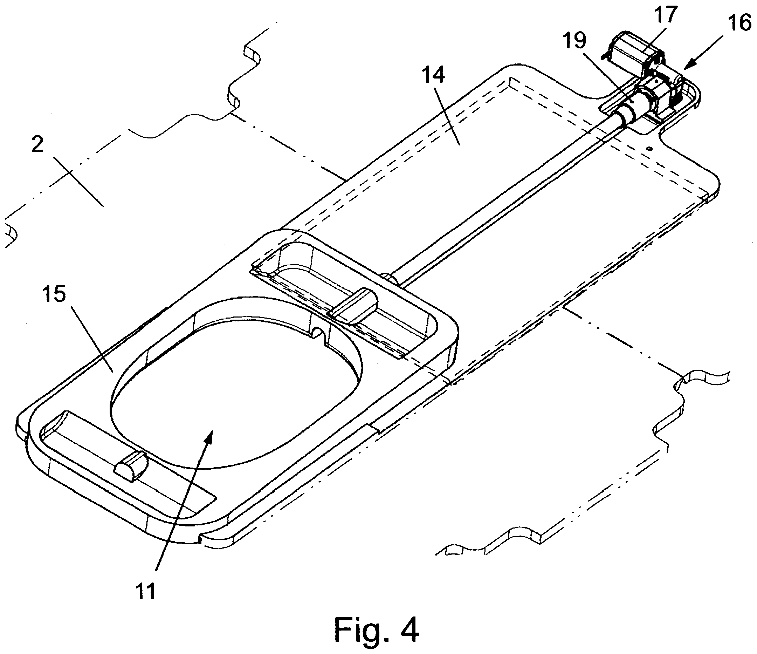

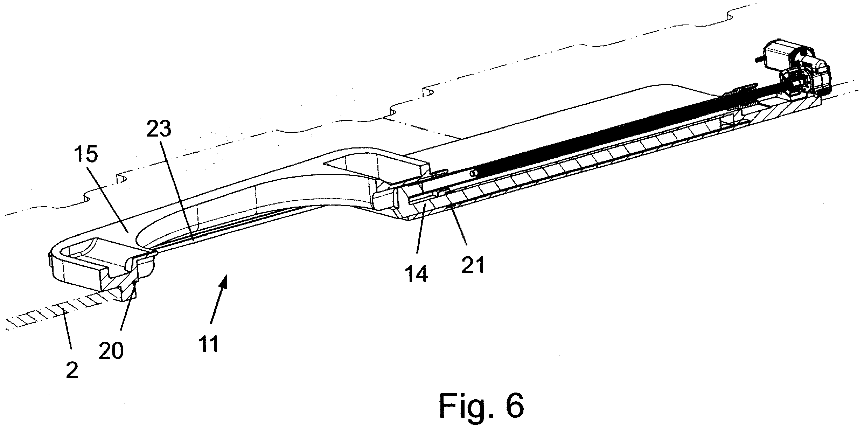

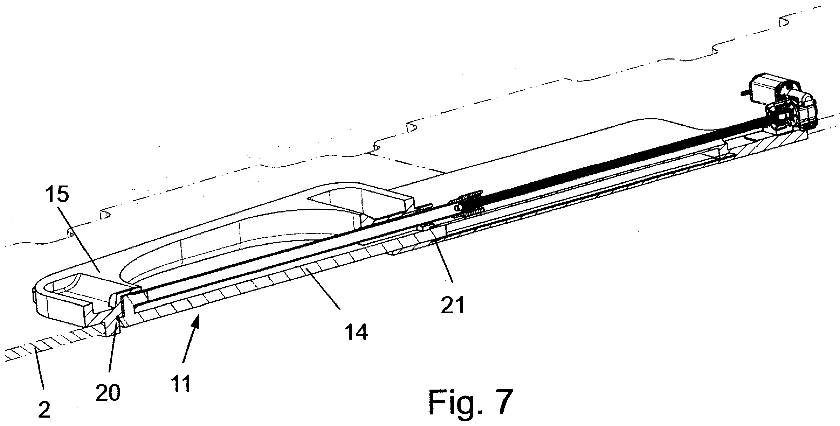

Wie der Darstellung in den Fign. 3 und 7 entnommen werden kann, ist das Minenschutzelement 14 insgesamt von plattenförmiger Geometrie. Das Minenschutzelement 14 besteht aus Panzerstahl und kann zwischen der in den Fign. 3 und 7 gezeigten Minenschutzstellung und der in Fign. 4 und 6 gezeigten Durchflussstellung hin- und her bewegt werden. Die Bewegung des Minenschutzelements 14 erfolgt translatorisch und auf direktem Weg. Alternativ könnte das Minenschutzelement rotatorisch bewegt werden, beispielsweise durch Drehen eines scheibenförmigen Minenschutzelements, welches das Endes 11 des Strömungskanals 10 nach Art einer Blende verschließt.

Zur Abstützung des Minenschutzelements 14 bei Mineneinwirkung ist ein Rahmen 15 vorgesehen, welcher innenseitig mit der Wanne 2 verschweißt ist. Der Rahmen 15 umschließt das erste Ende 11 des Strömungskanals 10 vollständig. An dem Rahmen 15 ist eine Flanschfläche 22 angeordnet, an welcher der Strömungskanal 10 angeflanscht wird. In dem Rahmen 15 ist ferner eine Nut 23 eingelassen, in welcher das Minenschutzelement 14 axial bewegbar geführt ist. Zur Abdichtung gegen Staub sind an dem Rahmen 15 aus Dichtungen 20, 21 aus eine Gummimaterial angeordnet, über welche der Rahmen 15 in der Minenschutzstellung gegenüber dem Minenschutzelement 14 abgedichtet wird, vgl. Fig. 7.

Zur Bewegung des Minenschutzelements 14 ist bei dem Amphibienfahrzeug 1 eine elektrisch über die Bordelektronik des Amphibienfahrzeugs 1 mit Energie versorgte Antriebsvorrichtung 16 vorgesehen, welche einen Motor 16, eine durch den Motor angetriebene Gewindespindel 18 und eine mit dem Minenschutzelement 14 verbundene auf der Gewindespindel aufsitzende Spindelmutter 19 aufweist. Gesteuert wird die Antriebsvorrichtung 16 und damit die Bewegung des Minenschutzelements 14 über eine in den Figuren nicht dargestellte Steuerelektronik.

In den Figuren ebenfalls nicht dargestellt ist eine Überwachungseinrichtung, über welche die Stellung des Minenschutzelements 14 erkannt und bei Fehlstellungen des Minenschutzelements 14 ein Warnsignal erzeugt werden kann. Hierauf soll im bei der folgenden Beschreibung des erfindungsgemäßen Verfahrens noch eingegangen werden.

Gemäß der Darstellung in Fig. 4 befindet sich das Minenschutzelement 14 in der Durchflussstellung, in welcher Wasser über das ovale Ende 11 des Strömungskanals 10 in diesen eintreten kann. In diese Stellung wird das Minenschutzelement 14 bei der Wasserfahrt verbracht, so dass das Amphibienfahrzeug 1 über den Wasserstrahlantrieb 11 angetrieben werden kann. Insofern ist der Strömungskanal 10 bei Wasserfahrt offen und wird nicht, auch nicht teilweise, durch das Minenschutzelement 14 verschlossen. Das Amphibienfahrzeug 1 wird bei der Wasserfahrt über die Rückstoßkräfte des ausgestoßenen Wasserstrahls vorangetrieben, wobei die Lenkung des Amphibienfahrzeugs 1 bei Wasserfahrt über Ausrichten einer am zweiten Ende 13 des Strömungskanals angeordneten, beweglichen Düse 24 erfolgt, welche den ausgestoßenen Wasserstrahl in eine entsprechende Richtung lenkt. Sofern das Amphibienfahrzeug 1 über mehrere Wasserstrahlantriebe 12 verfügt, kann die Lenkung des Amphibienfahrzeugs auch volumetrisch erfolgen. Dabei werden unterschiedliche Durchflussraten in den Wasserstrahlantrieben genutzt, um das Fahrzeug zu manövrieren.

Beim Anlanden des Amphibienfahrzeug 1 wird über einen Sensor des Amphibienfahrzeugs 1 automatisch erkannt, dass sich das Amphibienfahrzeug 1 an Land und nicht mehr im Wasser befindet. Der Sensor kann beispielsweise als Wassersensor ausgebildet sein. Der Sensor erzeugt ein Signal zum Verschließen des Strömungskanals 10, welches an die Steuerelektronik des Amphibienfahrzeugs 1 weitergeleitet wird. Die Steuerelektronik initiiert daraufhin den Schließvorgang des Minenschutzelements 14. Hierbei wird die Antriebsvorrichtung 16 derart angesteuert, dass sie das Minenschutzelement 14 aus der Durchflussstellung in Richtung der Minenschutzstellung 14 bewegt.

Optional kann das Signal des Sensors an eine Überwachungseinrichtung weitergeleitet werden, welche nach Art einer Funktionskontrolle überprüft, ob das Ende 11 des Strömungskanals 10 bei Landfahrt verschlossen ist. Ist das Ende 11 des Strömungskanals 10 bei Landfahrt nicht verschlossen, so kann ein Warnsignal erzeugt werden. Durch das Warnsignal kann die Fahrzeugbesatzung gewarnt werden, dass der Strömungskanal 10 nicht verschlossen ist und somit das Schutzniveau herabgesetzt ist. Die Fahrzeugbesatzung kann das Minenschutzelement 14 dann ggf. manuell in die Minenschutzstellung verbringen. Auch bei Wasserfahrt kann die Überwachungseinrichtung Fehlstellungen des Minenschutzelements 14 erkennen und melden. Ist das Ende 11 des Strömungskanals 10 bei Wasserfahrt verschlossen, so kann ein Warnsignal erzeugt werden und der Fahrzeugbesatzung damit angezeigt werden, dass der Strömungskanal 10 unerwünschter Weise blockiert ist. Die Fahrzeugbesatzung kann dann ggf. manuell das Minenschutzelement 14 von dem Ende 11 des Strömungskanals 10 entfernen.

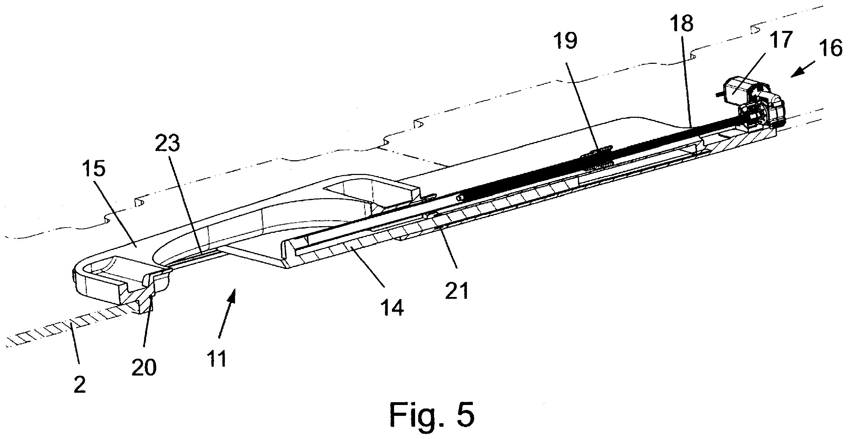

Eine Zwischenstellung des Minenschutzelements 14 während der Bewegung von der der Durchflussstellung in die Minenschutzstellung ist in der Fig. 5 dargestellt.

Schließlich erreicht das Minenschutzelement die in Fig. 7 gezeigte Minenschutzstellung, in welcher das gepanzerte Minenschutzelement 14 das erste Ende 11 des Strömungskanals 10 dichtend verschließt. Bei Landfahrt wird der Strömungskanal 10 zum Antrieb des Amphibienfahrzeugs 1 nicht benötigt und kann trockenliegen. Somit kann der Schutz des Amphibienfahrzeugs 1 bei Landfahrt durch das Verschließen des Strömungskanals 10 über das Minenschutzelement verbessert werden. Das Schutzniveau im Bereich des Endes 11 des Strömungskanals 10 ist daher bei Landfahrt höher als bei Wasserfahrt.

Wenn das Amphibienfahrzeug 1 von der Landfahrt wieder zur Wasserfahrt übergeht, werden die vorstehend beschriebenen Verfahrensschritte in umgekehrter Reihenfolge ausgeführt.

Das vorstehend beschriebene militärische Amphibienfahrzeug 1 mit einer die Fahrzeugbesatzung aufnehmenden Wanne 2 weist einen durch die Wanne geführten Strömungskanal 10 mit einem darin angeordneten Wasserstrahlantrieb 12 zum Antrieb des Amphibienfahrzeugs 1 bei Wasserfahrt und einem ein Ende 11 auf, welches bei Landfahrt über ein Minenschutzelement 14 verschließbar ausgebildet ist, so dass der Schutz des Amphibienfahrzeugs 1 bei der Landfahrt deutlich verbessert ist.

### Bezugszeichen:

- 1: Militärisches Amphibienfahrzeug
- 2: Wanne
- 3: Kettenlaufwerk
- 4: Waffe
- 5: Bug (bei Wasserfahrt)
- 6: Heck (bei Wasserfahrt)
- 7: Unterseite
- 10: Strömungskanal
- 11: ansaugseitiges Ende des Strömungskanals
- 12: Wasserstrahlantrieb
- 13: ausstoßseitiges Ende des Strömungskanals
- 14: Minenschutzelement
- 15: Rahmen
- 16: Antriebsvorrichtung
- 17: Motor
- 18: Gewindespindel
- 19: Spindelmutter
- 20: Dichtung
- 21: Dichtung
- 22: Flanschfläche
- 23: Nut
- 24: bewegliche Düse

- F: Durchflussrichtung

## Patentansprüche

1. Amphibienfahrzeug, insbesondere militärisches Amphibienfahrzeug, mit einer die Fahrzeugbesatzung aufnehmenden Wanne (2) und einem durch die Wanne (2) geführten Strömungskanal (10) mit einem darin angeordneten Wasserstrahlantrieb (12) zum Antrieb des Amphibienfahrzeugs (1) bei Wasserfahrt,
**dadurch gekennzeichnet,**
**dass** beide Enden (11, 13) des Strömungskanals (10) bei Landfahrt über Minenschutzelemente (14) verschließbar ausgebildet sind.

2. Amphibienfahrzeug nach einem der vorhergehenden Ansprüche,
**dadurch gekennzeichnet, dass** die Minenschutzelemente (14) plattenförmig ausgebildet sind.

3. Amphibienfahrzeug nach einem der vorhergehenden Ansprüche,
**dadurch gekennzeichnet, dass** die Minenschutzelemente (14) zwischen einer Minenschutzstellung und einer Durchflussstellung hin- und her bewegbar sind.

4. Amphibienfahrzeug nach einem der vorhergehenden Ansprüche, **gekennzeichnet durch** einen Rahmen (15) zur Abstützung eines Minenschutzelements (14) bei Mineneinwirkung.

5. Amphibienfahrzeug nach Anspruch 4, **dadurch gekennzeichnet, dass** das Ende (11, 13) des Strömungskanals (10) von dem Rahmen (15) umschlossen ist.

6. Amphibienfahrzeug nach einem der Ansprüche 4 oder 5, **dadurch gekennzeichnet, dass** der Rahmen (15) eine Flanschfläche (22) zur Verbindung mit dem Strömungskanal (10) aufweist.

7. Amphibienfahrzeug nach einem der Ansprüche 4 bis 6, **gekennzeichnet durch** eine Dichtung (20, 21) zur Abdichtung des Rahmens (15) gegenüber dem Minenschutzelement (14).

8. Amphibienfahrzeug nach einem der vorhergehenden Ansprüche, **gekennzeichnet durch** eine Antriebsvorrichtung (16) zur Bewegung eines Minenschutzelements (14), welche insbesondere als Spindelantrieb ausgebildet ist.

9. Amphibienfahrzeug nach Anspruch 8, **gekennzeichnet durch** eine Steuerelektronik zur Steuerung der Bewegung des Minenschutzelements (14).

10. Amphibienfahrzeug nach einem der vorhergehenden Ansprüche, **gekennzeichnet durch** eine Überwachungseinrichtung zur Erkennung der Stellung der Minenschutzelemente (14) und Erzeugung eines Warnsignals bei Fehlstellung der Minenschutzelemente (14).

11. Amphibienfahrzeug nach einem der vorhergehenden Ansprüche,
**dadurch gekennzeichnet, dass** der Strömungskanal (10) von der Unterseite der Wanne (2) zu dem Heck der Wanne (2) verläuft.

12. Verfahren zum Betrieb eines Amphibienfahrzeugs (1), insbesondere eines militärischen Amphibienfahrzeugs, mit einer die Fahrzeugbesatzung aufnehmenden Wanne (2) und einem durch die Wanne (2) geführten Strömungskanal (10) mit einem darin angeordneten Wasserstrahlantrieb (12) zum Antrieb des Amphibienfahrzeugs (1) bei Wasserfahrt,
**dadurch gekennzeichnet,**
**dass** beide Enden (11, 13) des Strömungskanals (10) bei Landfahrt über Minenschutzelemente (14) verschlossen werden.

13. Verfahren nach Anspruch 12 **dadurch gekennzeichnet, dass** das Amphibienfahrzeug (1) nach einem der Ansprüche 1 bis 11 ausgebildet ist.

14. Verfahren nach einem der Ansprüche 12 oder 13, **dadurch gekennzeichnet, dass** ein Sensor ein Signal zum Verschließen erzeugt, wenn detektiert wird, dass sich das Amphibienfahrzeug (1) an Land befindet.

## Claims

1. Amphibious vehicle, in particular military amphibious vehicle, comprising a hull (2) which accommodates the vehicle crew, and a flow duct (10) which is guided through the hull (2) and has a water jet drive (12), which is arranged therein, for driving the amphibious vehicle (1) during travel on water, **characterized in that** both ends (11, 13) of the flow duct (10) are designed to be closable via anti-mine elements (14) during travel on land.

2. Amphibious vehicle as claimed in either of the preceding claims, **characterized in that** the anti-mine elements (14) are of plate-like design.

3. Amphibious vehicle as claimed in one of the preceding claims, **characterized in that** the anti-mine elements (14) are movable to and fro between an anti-mine position and a throughflow position.

4. Amphibious vehicle as claimed in one of the preceding claims, **characterized by** a frame (15) for supporting an anti-mine element (14) during action of a mine.

5. Amphibious vehicle as claimed in claim 4, **characterized in that** the end (11, 13) of the flow duct (10) is surrounded by the frame (15).

6. Amphibious vehicle as claimed in either of claims 4 or 5, **characterized in that** the frame (15) has a flange surface (22) for connection to the flow duct (10).

7. Amphibious vehicle as claimed in one of claims 4 to 6, **characterized by** a seal (20, 21) for sealing off the frame (15) from the anti-mine element (14).

8. Amphibious vehicle as claimed in one of the preceding claims, **characterized by** a driving device (16) for moving an anti-mine element (14), which driving device is designed in particular as a spindle drive.

9. Amphibious vehicle as claimed in claim 8, **characterized by** an electronic control unit for controlling the movement of the anti-mine element (14).

10. Amphibious vehicle as claimed in one of the preceding claims, **characterized by** a monitoring device for detecting the position of the anti-mine elements (14) and producing a warning signal in the event of misalignment of the anti-mine elements (14).

11. Amphibious vehicle as claimed in one of the preceding claims, **characterized in that** the flow duct (10) runs from the lower side of the hull (2) to the rear of the hull (2).

12. Method for operating an amphibious vehicle (1), in particular a military amphibious vehicle, comprising a hull (2) which accommodates the vehicle crew, and a flow duct (10) which is guided through the hull (2) and has a water jet drive (12), which is arranged therein, for driving the amphibious vehicle (1) during travel on water, **characterized in that** both ends (11, 13) of the flow duct (10) are closed via anti-mine elements (14) during travel on land.

13. Method as claimed in claim 12, **characterized in that** the amphibious vehicle (1) is designed as claimed in one of claims 1 to 11.

14. Method as claimed in either of claims 12 or 13, **characterized in that** a sensor produces a signal for closure when it is detected that the amphibious vehicle (1) is on land.

## Revendications

1. Véhicule amphibie, en particulier véhicule amphibie militaire, comprenant un bac (2) recevant l'équipage du véhicule et un canal d'écoulement (10) guidé à travers le bac (2) comprenant un entraînement à propulsion hydraulique (12) disposé dans celui-ci pour l'entraînement du véhicule amphibie (1) lors de son déplacement sur l'eau,
**caractérisé en ce que**
les deux extrémités (11, 13) du canal d'écoulement (10) sont réalisées de manière à pouvoir être fermées par le biais d'éléments de protection anti-mines (14) lors d'un déplacement sur terre.

2. Véhicule amphibie selon l'une quelconque des revendications précédentes, **caractérisé en ce que** les éléments de protection anti-mines (14) sont réalisés en forme de plaque.

3. Véhicule amphibie selon l'une quelconque des revendications précédentes, **caractérisé en ce que** les éléments de protection anti-mines (14) peuvent être déplacés d'avant en arrière entre une position de protection anti-mines et une position de passage.

4. Véhicule amphibie selon l'une quelconque des revendications précédentes, **caractérisé par** un châssis (15) pour supporter un élément de protection anti-mines (14) en cas d'attaque de mines.

5. Véhicule amphibie selon la revendication 4, **caractérisé en ce que** l'extrémité (11, 13) du canal d'écoulement (10) est entourée par le châssis (15).

6. Véhicule amphibie selon l'une quelconque des revendications 4 ou 5, **caractérisé en ce que** le châssis (15) présente une surface de bride (22) destinée à être raccordée au canal d'écoulement (10).

7. Véhicule amphibie selon l'une quelconque des revendications 4 à 6, **caractérisé par** une garniture d'étanchéité (20, 21) pour l'étanchéité du châssis (15) par rapport à l'élément de protection anti-mines (14).

8. Véhicule amphibie selon l'une quelconque des revendications précédentes, **caractérisé par** un dispositif d'entraînement (16) pour déplacer un élément de protection anti-mines (14), lequel est réalisé notamment sous forme d'entraînement à broche.

9. Véhicule amphibie selon la revendication 8, **caractérisé par** un électronique de commande pour commander le mouvement de l'élément de protection anti-mines (14).

10. Véhicule amphibie selon l'une quelconque des revendications précédentes, **caractérisé par** un dispositif de surveillance pour détecter la position des éléments anti-mines (14) et pour générer un signal d'avertissement en cas de mauvaise position des éléments de protection anti-mines (14).

11. Véhicule amphibie selon l'une quelconque des revendications précédentes, **caractérisé en ce que** le canal d'écoulement (10) s'étend depuis le côté inférieur du bac (2) jusqu'à l'arrière du bac (2).

12. Procédé pour faire fonctionner un véhicule amphibie (1), en particulier un véhicule amphibie militaire, comprenant un bac (2) recevant l'équipage du véhicule et un canal d'écoulement (10) guidé à travers le bac (2) comprenant un entraînement à propulsion hydraulique (12) disposé dans celui-ci pour l'entraînement du véhicule amphibie (1) lors de son déplacement sur l'eau,
**caractérisé en ce que**
les deux extrémités (11, 13) du canal d'écoulement (10) sont fermées par le biais d'éléments de protection anti-mines (14) lors d'un déplacement sur terre.

13. Procédé selon la revendication 12, **caractérisé en ce que** le véhicule amphibie (1) est réalisé selon l'une quelconque des revendications 1 à 11.

14. Procédé selon l'une quelconque des revendications 12 ou 13, **caractérisé en ce qu'**un capteur génère un signal de fermeture lorsqu'il est détecté que le véhicule amphibie (1) est sur la terre.
